# EUROPÄISCHE PATENTSCHRIFT

(11) **EP 1 668 386 B1**
(45) Veröffentlichungstag und Bekanntmachung des Hinweises auf die Patenterteilung: **18.04.2007**
(21) Anmeldenummer: 04787094.4
(22) Anmeldetag: 03.09.2004
(51) Int. Cl.: G01S 17/93, G01S 17/88, B60Q 1/08

(54) **VERFAHREN ZUR VERBESSERUNG DER SICHT IN EINEM KRAFTFAHRZEUG**
METHOD FOR IMPROVING VISION IN A MOTOR VEHICLE
PROCEDE POUR AMELIORER LA VISIBILITE DANS UN VEHICULE AUTOMOBILE

(30) Priorität: 19.09.2003 DE 10343479
(43) Veröffentlichungstag der Anmeldung: 14.06.2006
(73) Patentinhaber: ROBERT BOSCH GMBH, 70442 Stuttgart (DE)
(72) Erfinder: HAUG, Karsten, 70372 Stuttgart (DE)
(86) Internationale Anmeldenummer: PCT/EP2004/052021
(87) Internationale Veröffentlichungsnummer: WO 2005/029125

(56) Entgegenhaltungen:
- EP-A- 0 353 200
- EP-A- 1 026 031
- US-A1- 2002 067 413

## Beschreibung

### Stand der Technik

Die Erfindung betrifft ein Verfahren und eine Verarbeitungseinheit zur Verbesserung der Sicht in einem Kraftfahrzeug, sowie deren Verwendung in einem Nachtsichtsystem in einem Kraftfahrzeug, wobei die Merkmale des Oberbegriffs aus EP-A- 0 353 200 bekannt sind.

Aus der deutschen Offenlegungsschrift DE 40 32 927 A1 ist eine Vorrichtung zur Verbesserung der Sichtverhältnisse in einem Kraftfahrzeug beschrieben. Dabei wird das mit einer infrarotempfindlichen Kamera erfasste Bild mit einer als Head-up-Display ausgebildeten Anzeigevorrichtung als virtuelles Bild der äußeren Landschaft visuell überlagert und dem Fahrer angezeigt. Ferner ist zur Bestrahlung des von dem Fahrer erfassten Sichtbereiches in Fahrrichtung wenigstens eine Strahlungsquelle mit einem Infrarotstrahlungsanteil vorgesehen.

Derartige Nachtsichtsysteme (Night-View-Systeme, NV-Systeme), wie sie in der DE 40 32 927 A1 beschrieben sind, auf der Basis von Licht mit Wellenlängen im nahen infraroten Wellenlängenbereich (near-infrared, NIR) beleuchten die Szene vor einem Kraftfahrzeug mittels Infrarotscheinwerfern (Near-Infrared-Scheinwerfer, NIR Scheinwerfer) im allgemeinen mit Fernlichtcharakteristik. Unter bestimmten Bedingungen kann durch die für Menschen und die meisten Tiere nicht-sichtbare NIR-Strahlung eine Beeinträchtigung der Augen von Menschen und Tieren entstehen, die sich im Wirkungsbereich eines solchen NIR-Scheinwerfers aufhalten. Zur Vermeidung einer solchen Beeinträchtigung ist es denkbar, Mindestabstände für bestimmte Bestrahlungsstärken zwischen NIR-Scheinwerfern und Auge abzuleiten, die nicht unterschritten werden sollten, und beispielsweise durch konstruktive Maßnahmen gewährleistet werden.

Neben konstruktiven Maßnahmen ist aus der deutschen Offenlegungsschrift DE 10126 492 A1 ein alternatives Verfahren bekannt, um eine Beeinträchtigung von Verkehrsteilnehmern durch NIR-Licht zu gewährleisten. Es wird ein Verfahren vorgeschlagen bei dem Laserlicht mit einer Wellenlänge außerhalb des sichtbaren Spektrums nur dann abgestrahlt wird, wenn sich das Kraftfahrzeug in Fahrt befindet. Ferner ist bekannt, NIR-Scheinwerfer erst ab einer gewissen Mindestgeschwindigkeit, beispielsweise 30 km/h, zu aktivieren. Nachteilig an diesen Verfahren ist, dass die Nachtsichtfunktion eines Nachtsichtsystems bei stehendem Kraftfahrzeug und/oder langsamer Fahrt nicht verfügbar ist, obgleich auch hier Situationen vorliegen können, bei der die Nachtsichtfunktion nützlich ist. Beispielsweise wäre eine Nachtsichtfunktion bei langsamer Fahrt auf feldwegartigen Straßen oder engen Nebenstraßen nützlich. Ferner wird durch das häufige Ein- und Ausschalten der NIR-Scheinwerfer deren Lebensdauer beeinträchtigt. Insbesondere bei einer Stop-and-go-Situation und/oder Fahrsituationen in der Nähe der Mindestgeschwindigkeit werden die NIR-Scheinwerfer strapaziert. Dies kann dazu führen, dass die Akzeptanz eines derartigen Nachtsichtsystems beim Nutzer durch diese eingeschränkte Verfügbarkeit reduziert wird.

Hinweise auf beeinträchtigungsfreies und gleichzeitig mit hoher Verfügbarkeit arbeitendes Verfahren zur Verbesserung der Sicht in einem Kraftfahrzeug fehlen in den vorstehend genannten deutschen Offenlegungsschriften DE 40 32 927 A1 und DE 101 26 492 A1.

### Vorteile der Erfindung

Das nachfolgend beschriebene Verfahren zur Verbesserung der Sicht in einem Kraftfahrzeug mit den Merkmalen des unabhängigen Patentanspruchs hat den Vorteil, dass hierdurch ein beeinträchtigungsfreies und gleichzeitig mit hoher Verfügbarkeit arbeitendes Verfahren zur Verbesserung der Sicht in einem Kraftfahrzeug zur Verfügung steht. In besonders vorteilhafter Weise trägt das Verfahren dazu bei, dass eine Beeinträchtigung, insbesondere eine Augenbeeinträchtigung, von Objekten, beispielsweise Menschen, wie Fußgängern und/oder Radfahrern und/oder Kraftfahrern, und/oder Tieren, im Beleuchtungsbereich der Lichtquelle durch die nicht sichtbare Strahlung außerhalb des sichtbaren Spektrums vermindert wird.

Besonders vorteilhaft ist die Verwendung des nachfolgend beschriebenen Verfahrens in Nachtsichtsystemen in Kraftfahrzeugen, bei denen ein zumindest im sichtbaren Spektralbereich empfindlicher, insbesondere im nahen infraroten Spektralbereich empfindlicher, Videosensor die Umgebung des Kraftfahrzeuges aufnimmt und diese Informationen dem Fahrer angezeigt werden. Gegenüber den bekannten Verfahren ist eine Mindestgeschwindigkeit für die Aktivierung des Scheinwerfers und damit des Nachtsichtsystems nicht mehr erforderlich. Durch das nachfolgend beschriebene Verfahren lässt sich ein Nachtsichtsystem in vorteilhafter Weise immer aktivieren, wenn die Sensoren (Überwachungssensoren) einen freien Beeinträchtigungsbereich detektieren, d. h. dass sich im Beeinträchtigungsbereich keine Objekte befinden und/oder diese weiter als der zum Ausschluss einer Beeinträchtigung erforderliche Mindestabstand entfernt sind. Das nachfolgend beschriebene Verfahren trägt in besonders vorteilhafter Weise dazu bei, dass die Lebensdauer der verwendeten Lichtquellen, insbesondere der zumindest im nahen infraroten Wellenlängenbereich leuchtende Scheinwerfer (NIR-Scheinwerfer), hoch ist und damit eine hohe Verfügbarkeit der Lichtquellen und insbesondere des Nachtsichtsystems vorliegt.

Ferner ist das Verfahren bei Kolonnenfahrten von Kraftfahrzeugen vorteilhaft, da die Anwesenheit von Kraftfahrzeugen und/oder deren Abstand zu den Lichtquellen, insbesondere zu den NIR-Scheinwerfem, durch die Überwachungssensoren, beispielsweise einen Radarsensor, detektiert werden und bei Unterschreiten des Mindestabstandes die Lichtquellen, insbesondere NIR-Scheinwerfer, beispielsweise deaktiviert werden. Hierdurch wird eine Beeinträchtigung von Fahrgästen von vorausfahrenden Kraftfahrzeugen, die nach hinten hinausschauen, und/oder eine Beeinträchtigung des Fahrers des vorausfahrenden Kraftfahrzeuges über den Rückspiegel in vorteilhafter Weise verringert.

Ein weiterer Vorteil des nachfolgend beschriebenen Verfahrens ist, dass das Verfahren einen hohen Freiheitsgrad bei der Auslegung einer Lichtquelle, die Licht mit Wellenlängen außerhalb des sichtbaren Spektrums abstrahlt, insbesondere eines NIR-Scheinwerfers bereitstellt. Beispielsweise sind die Freiheitsgrade bei der Auslegung der Lichtquelle hinsichtlich abgestrahlter Leistung und/oder genutztem spektralem Bereich und/oder Leuchtcharakteristik hoch. Dies trägt in besonders vorteilhafter Weise dazu bei, dass eine hohe Leistungsfähigkeit (Performance) der Lichtquelle, insbesondere des NIR-Scheinwerfer, und damit des Nachtsichtsystems bei niedrigen Kosten vorliegt. Besonders vorteilhaft ist, dass das Verfahren eine optimale Abstimmung von Scheinwerfer, insbesondere NIR Scheinwerfern, und Videosensor des Nachtsichtsystems auf wellenlängenabhängige Reflektanzen natürlicher Szene ermöglicht.

Vorteilhaft ist das nachfolgend beschriebene Verfahren bei der Fertigung und/oder Wartung und/oder Vorführung einer Lichtquelle, die Licht mit Wellenlängen außerhalb des sichtbaren Spektrums strahlt, insbesondere eines NIR-Scheinwerfers und/oder eines damit ausgestatteten Nachtsichtsystems, da eine Beeinträchtigung von Fertigungs- und/oder Werkstattpersonal reduziert wird. Besonders vorteilhaft ist das Verfahren bei Demonstrationsmodi des Nachtsichtsystems, die verwendet werden, um die Nachtsichtfunktion im Verkaufsraum potentiellen Kunden des Kraftfahrzeuges zu demonstrieren, da beispielsweise eine Beeinträchtigung von zufällig herumstehenden Personen, wie Kindern deren Augen sich auf Höhe der Scheinwerfer befinden, vermindert wird.

Besonders vorteilhaft ist, dass wenigstens ein Ultraschallsensor und/oder wenigstens ein Radarsensor, der vorzugsweise im Wellenlängenbereich 24 GHz und/oder 77 GHz arbeitet, und/oder wenigstens ein LIDAR-Sensor und/oder wenigstens ein Videosensor (Videokamera, Kamera) Sensorsignale erzeugt, da durch die Nutzung dieser im Kraftfahrzeug für andere Funktionen bereits eingesetzten Sensoren nur geringe Zusatzkosten entstehen, da keine zusätzlichen Bauteile (Hardware) erforderlich sind

Vorteilhaft ist die Deaktivierung und/oder Aktivierung der Lichtquelle in Abhängigkeit der Sensorsignale, da hierdurch eine einfache und preiswerte Möglichkeit zur Einstellung der Lichtquelle zur Verfügung steht.

Die Einstellung der räumlichen und/oder zeitlichen Intensität des Lichtes der Lichtquelle in Abhängigkeit der Sensorsignale hat den Vorteil, dass gezielt eine Beeinträchtigung von anwesenden Objekten reduziert wird, indem die räumliche und/oder zeitliche Bestrahlung des anwesenden Objektes zumindest mit Licht mit Wellenlängen außerhalb des sichtbaren Spektrums der Lichtquelle kleiner als ein vorgebbarer erster Grenzwert ist. Gleichzeitig wird die Funktionalität eines derart ausgestatteten Nachtsichtsystems in den übrigen Erfassungsbereichen nicht eingeschränkt. Dies trägt zu einer hohen Verfügbarkeit bei. Vorteilhaft ist ferner die alternative oder zusätzliche Einstellung der spektralen Zusammensetzung des Lichtes der Lichtquelle in Abhängigkeit der Sensorsignale.

Besonders vorteilhaft ist eine Warnung des wenigstens einen anwesenden Objektes durch ein akustisches und/oder optisches Warnsignal, falls die räumliche und/oder zeitliche Bestrahlung des wenigstens einen anwesenden Objektes zumindest mit dem Licht mit Wellenlängen außerhalb des sichtbaren Spektrums der Lichtquelle größer als ein vorgebbarer zweiter Grenzwert ist, wobei der zweite Grenzwert kleiner als der erste Grenzwert oder gleich dem ersten Grenzwert ist, da hierdurch die Verfügbarkeit der Lichtquelle, insbesondere des NIR-Scheinwerfers, und/oder des Nachtsichtsystems erhöht wird, da vor einer Einstellung der Lichtquelle das anwesende Objekt gewarnt wird.

Vorteilhaft ist ferner, dass Sensorsignale von wenigstens zwei Sensoren derart fusioniert werden, dass in Abhängigkeit von gewichteten Objektmerkmalen des wenigstens einen anwesenden Objektes dessen Kennwerte ermittelt werden. Die Fusion der Sensorsignale trägt zu einem besonders robusten Verfahren bei.

Besonders vorteilhaft ist, dass der wenigstens eine Sensor Sensorsignale erzeugt, die den Abstand des wenigstens einen anwesenden Objektes zu dem wenigstens einen Sensor und/oder zu der wenigstens einen Lichtquelle und/oder die Größe und/oder die Form des wenigstens einen Objektes repräsentieren.

Die vorstehend beschriebenen Vorteile des Verfahrens gelten entsprechend für eine Vorrichtung und/oder eine Verarbeitungseinheit zur Verbesserung der Sicht in einem Kraftfahrzeug, sowie für die Verwendung der Vorrichtung und/oder der Verarbeitungseinheit in einem Nachtsichtsystem in einem Kraftfahrzeug.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 ein Blockdiagramm des bevorzugten Ausführungsbeispiels,
- Figur 2 die Anordnung der Sensoren in einem Kraftfahrzeug des bevorzugten Ausführungsbeispiels,
- Figur 3 ein Ablaufdiagramm des Verfahrens des bevorzugten Ausführungsbeispiels.

### Beschreibung von Ausführungsbeispielen

Nachfolgend werden ein Verfahren, eine Vorrichtung und eine Verarbeitungseinheit zur Verbesserung der Sicht in einem Kraftfahrzeug beschrieben, wobei eine Lichtquelle des Kraftfahrzeuges einen Beleuchtungsbereich beleuchtet. Wenigstens ein Überwachungssensor des Kraftfahrzeuges überwacht die Umgebung des Kraftfahrzeuges auf die Anwesenheit von Objekten. Die Lichtquelle wird dabei derart eingestellt, dass die räumliche und/oder zeitliche Bestrahlung der detektierten anwesenden Objekte zumindest mit Licht mit Wellenlängen außerhalb des sichtbaren Spektrums, beispielsweise nahes infrarotes Licht, kleiner als ein vorgebbarer Grenzwert ist.

Im bevorzugten Ausführungsbeispiel wird der Raum vor zwei NIR-Scheinwerfern eines Nachtsichtsystems durch Sensoren überwacht. Hierdurch werden Personen und andere Objekte, die sich vor den NIR-Scheinwerfern befinden, und/oder ihr Abstand zu den NIR-Scheinwerfern detektiert und bei Unterschreiten der Mindestentfernung die NIR-Scheinwerfer deaktiviert. Alternativ zu der Deaktivierung von beiden NIR Scheinwerfern kann auch nur ein Scheinwerfer deaktiviert werden, so dass die Nachtsichtfunktion des Nachtsichtsystems zumindest in eingeschränktem Maße verfügbar bleibt.

Alternativ zur Deaktivierung wenigstens eines NIR-Scheinwerfers wird in einer Variante des bevorzugten Ausführungsbeispiels die Leistung der beiden NIR-Scheinwerfer oder wenigstens eines NIR-Scheinwerfers reduziert, so dass beim detektierten Abstand keine Beeinträchtigung mehr für das Objekt erfolgt. Alternativ oder zusätzlich zur Reduktion der Leistung werden in einer weiteren Variante bestimmte Wellenlängenbereiche deaktiviert, beispielsweise durch Zuschalten von bestimmten optischen Blockfiltern. Ferner wird alternativ oder zusätzlich eine Veränderung der Strahlcharakteristik, beispielsweise durch mechanische Blenden und/oder optische Elemente, durchgeführt. In einer weiteren Variante des bevorzugten Ausführungsbeispiels wird die Einstellung der Lichtquelle in Abhängigkeit der kritischen Einwirkungszeit durchgeführt. Die kritische Einwirkungszeit ist die Zeit ab der eine Beeinträchtigung des menschlichen Auges wahrscheinlich ist. Dies ermöglicht, dass von der Einwirkungszeit abhängig nicht sofort eine Einstellung der Lichtquellen erfolgen muss, sondern erst kurz vor Erreichen der kritischen Einwirkungszeit.

Im bevorzugten Ausführungsbeispiel werden Sensoren eingesetzt, die bereits im Kraftfahrzeug vorhanden sind oder deren Verwendung zumindest im Kraftfahrzeug bekannt ist Dies sind beispielsweise Parkpilotsensoren (PP-Sensoren) auf Ultraschallbasis (Ultraschallsensoren), Long-Range-Radarsensoren mit 77 GHz und langer Reichweite wie sie für ACC (Adaptive Cruise Control) benutzt werden, Short-Range-Radar-Sensoren mit 24 GHz und kurzer Reichweite oder LIDAR-Sensoren. Alternativ oder zusätzlich wird ein Videosensor, insbesondere der bereits eingebaute Videosensor des Nachtsichtsystems genutzt. In einer Variante des bevorzugten Ausführungsbeispiels werden zur Überwachung des Beleuchtungsbereiches der Lichtquellen, insbesondere der NIR-Scheinwerfer, Sensorprinzipien verwendet, die aus der Sicherheitstechnik bekannt sind und beispielsweise zur Sicherung von Gefahrenbereiche von Maschinen benutzt werden. Dies sind beispielsweise Laser-Scanner und/oder Lichtschranken und/oder Lichtschnittsensoren.

Im bevorzugten Ausführungsbeispiel werden die Sensoren durch Sensorfusion derart kombiniert, dass der gesamte relevante Raum vor dem Fahrzeug überwacht wird. Die Parkpilotsensoren überwachen den Nahbereich bis etwa 3 Meter vor dem Kraftfahrzeug, während mit dem Radarsensor der Fembereich ab etwa 2 Meter und/oder dem Videosensor der Bereich ab etwa 2 Meter vor der Windschutzscheibe überwacht wird.

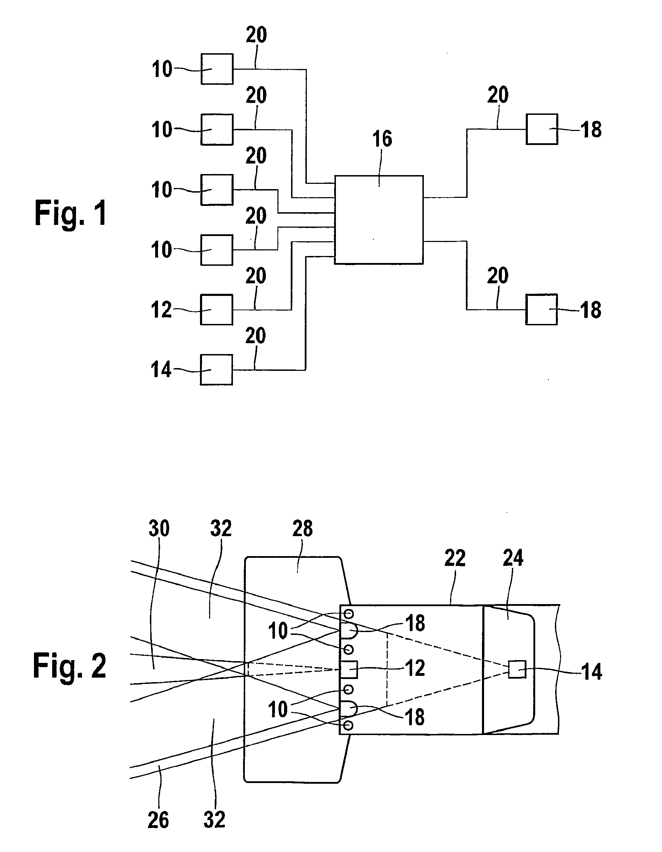

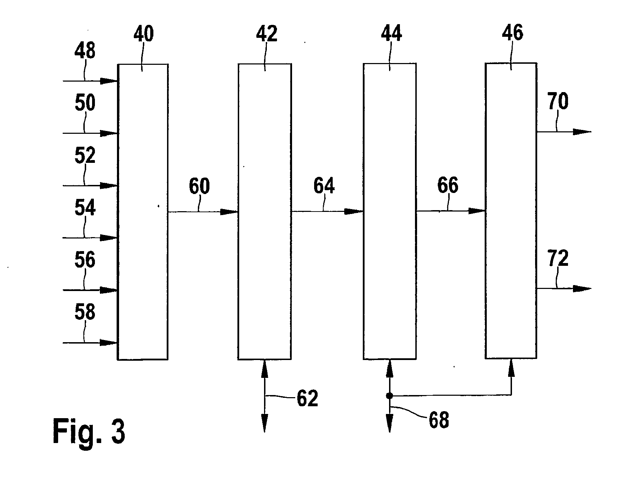

Figur 1 zeigt ein Blockdiagramm des bevorzugten Ausführungsbeispiels, bestehend aus Sensoren 10, 12, 14, einer Verarbeitungseinheit 16 und NIR-Scheinwerfern 18. Die Sensoren 10, 12, 14 sind, wie nachfolgend in Figur 2 erläutert, an einem Kraftfahrzeug angeordnet. Als Sensoren 10, 12, 14 werden im bevorzugten Ausführungsbeispiel vier Ultraschallsensoren 10, ein Radarsensor 12 und ein Videosensor 14 verwendet. Die Sensoren 10, 12, 14 überwachen den Beleuchtungsbereich der NIR-Scheinwerfer 18 derart, dass sich die Überwachungsbereiche, die den Beleuchtungsbereich der NIR-Scheinwerfer 18 einzeln nicht vollständig abdecken, in überlappender Weise so ergänzen, dass sie den Beleuchtungsbereich der NIR-Scheinwerfer 18 vollständig überwachen. Im bevorzugten Ausführungsbeispiel sind der Videosensor 14 und die NIR-Scheinwerfer 18 Bestandteil eines Nachtsichtsystems, das durch eine Anzeigevorrichtung zur Darstellung von Informationen des Videosensors 14 ergänzt wird, die dem Fahrer angezeigt werden. Im bevorzugten Ausführungsbeispiel wird eine CMOS-Videokamera verwendet, wobei alternativ oder zusätzlich in einer Variante eine CCD-Videokamera eingesetzt wird. Für die Nachtsichtfunktion ist insbesondere derjenige Spektralbereich relevant, der oberhalb des sichtbaren Spektrums (380nm - 780 nm) und innerhalb des Empfindlichkeitsbereichs von CCD- oder CMOS-Videokameras (etwa 350nm - 1100nm, rückführbar auf die spektrale Empfindlichkeit von Silizium), also zwischen 780nm und 1100nm liegt. Für die Nachtsichtfunktion ist aufgrund des Empfindlichkeitsbereiches der Videokamera also insbesondere NIR IR-A relevant. Als NIR-Scheinwerfer 18 werden im bevorzugten Ausführungsbeispiel Scheinwerfer mit Halogenglühlampen mit einer Farbtemperatur zwischen 3200 und 3400°K verwendet, deren Spektralbereich durch Interferenz- oder Absorptionsfilter auf den nahen Infrarotbereich zwischen ca. 780nm und ca. 1200nm eingeschränkt werden. In einer Variante des bevorzugten Ausführungsbeispiels werden als NIR-Scheinwerfer 18 Laserscheinwerfer verwendet. Laserscheinwerfer haben den Vorteil, dass sie im Gegensatz zu Halogenglühlampen gepulst, vorzugsweise hochfrequent gepulst, werden. Dies ermöglicht die Synchronisation des Laserscheinwerfers zur Belichtungsphase der Videokamera. In einer weiteren Variante wird als NIR-Scheinwerfer 18 ein Array von Light-Emitting-Diodes (LEDs) eingesetzt. Prinzipiell kann jede Lichtquelle genutzt werden, deren Spektralbereich mindestens den NIR IR-A-Bereich oder Teile davon beinhaltet. Der genutzte Bereich wird beispielsweise durch geeignete optischer Filter festgelegt. Ferner wird in einer weiteren Variante des bevorzugten Ausführungsbeispiels der Spektralbereich des NIR-Scheinwerfers 18 durch nichtlineare Methoden der Wellenlängenverschiebung, beispielsweise durch Frequenzverdopplung, in den NIR IR-A-Bereich verschoben. In Abhängigkeit der Anwesenheit eines oder mehrerer Objekte erzeugen die Sensoren Sensorsignale, die über Signalleitungen 20 an die Verarbeitungseinheit 16 übertragen werden. Die Verarbeitungseinheit 16 besteht aus mehreren, in Figur 3 dargestellten Funktionsmodulen 40, 42, 44, 46. Die Funktionsmodule 40, 42, 44, 46 sind als Programme und/oder Programmschritte wenigstens eines Mikroprozessors in der Verarbeitungseinheit 16 und/oder mittels programmierbarer Logik, insbesondere als ASIC und/oder FPGA, realisiert. Die Verarbeitungseinheit 16 erzeugt Einstellsignale der NIR-Scheinwerfer 18, die über Signalleitungen 20 übertragen werden, wobei die räumliche und/oder zeitliche Bestrahlung des wenigstens einen anwesenden und von den Sensoren 10, 12, 14 erkannten Objektes zumindest mit dem Licht mit den Wellenlängen außerhalb des sichtbaren Spektrums der NIR-Scheinwerfer 18 kleiner als ein vorgebbarer erster Grenzwert ist. Das sichtbare Spektrum wird durch den Wellenlängenbereich der elektromagnetischen Strahlung festgelegt, den das menschliche Auge wahrnimmt. Nach DIN5030 Teil 2 werden die folgenden Spektralbereiche unterschieden:
Nahes UV (UV-A): 315nm - 380nm
Sichtbares Licht (VIS): 380nm - 780nm
Nahes Infrarot (NIR IR-A): 780nm - 1400nm
Nahes Infrarot (NIR IR-B): 1400nm - 3000nm

Demnach liegt das sichtbare Spektrum (VIS) im Wellenlängenbereich zwischen 380 nm und 780 nm. Infrarotstrahlung mit Wellenlängen größer als 780 nm, insbesondere NIR IR-A im Wellenlängenbereich zwischen 780 nm bis 1400 nm und NIR IR-B im Wellenlängenbereich 1400 nm bis 3000 nm, und Ultraviolette Strahlung (UV-Strahlung) mit Wellenlängen kleiner als 380 nm, insbesondere UV-A im Wellenlängenbereich zwischen 315 nm bis 380 nm, ist demnach Licht mit Wellenlängen außerhalb des sichtbaren Spektrums. Die Daten werden über die Signalleitungen 20 elektrisch und/oder optisch und/oder per Funk übertragen, wobei die Signalleitungen 20 eine 1-Draht-Leitung und/oder eine 2-Draht-Leitung und/oder eine Mehrdraht-Leitung sind. Insbesondere sind die Signalleitungen 20 alternativ oder zusätzlich als Busleitung, wie dem CAN-Bus, ausgeführt.

Figur 2 zeigt die Anordnung der Sensoren 10, 12, 14 und deren Überwachungsbereiche 26, 28, 30 im Vorfeld des Kraftfahrzeuges 22 des bevorzugten Ausführungsbeispiels. Dabei ist die Figur 2 eine Draufsicht auf das Kraftfahrzeug 22, dessen Fahrtrichtung in Bildrichtung links ist. Die beiden NIR-Scheinwerfer 18 sind im Bereich der Scheinwerfer für das Fern- und Abblendlicht und/oder im Bereich der Zusatzscheinwerfer und/oder im Bereich der Nebelscheinwerfer an der Vorderfront des Kraftfahrzeuges 22 derart angebracht, dass die Beleuchtungsbereiche 32 in Fahrtrichtung im wesentlichem dem Beleuchtungsbereich des Fernlichtes entsprechen. Ferner ist im Bereich des Kühlergrills und/oder der vorderen Stoßstange des Kraftfahrzeuges 22 der Radarsensor 12 angebracht. Alternativ oder zusätzlich zum Radarsensor 12 wird in einer Variante des bevorzugten Ausführungsbeispiels ein LIDAR-Sensor eingesetzt. Der Überwachungsbereich 30 des Radarsensors 12 und/oder des LIDAR-Sensors hat einen Öffnungswinkel von etwa 15° bis 20°. Der Überwachungsbereich 30 beginnt bei etwa 2 Meter vor dem Sensor. Alternativ oder zusätzlich werden in einer weiteren Variante abtastende (scannende) Radar- oder LIDAR-Prinzipien benutzt. Dabei erweitert sich der Überwachungsbereich 30 dieser beiden Sensortypen entsprechend um den Scanwinkel, der in Figur 2 nicht eingezeichnet ist. Der Videosensor 14 ist im bevorzugten Ausführungsbeispiel an der Innenseite der Windschutzscheibe 24 des Kraftfahrzeuges 22 angebracht. Neben der Überwachungsfunktion ist der Videosensor 14 Bestandteil des Nachtsichtsystems des Kraftfahrzeuges. Der Videosensor 14 ist im Innenraum des Kraftfahrzeuges 22 im Bereich des Innenrückspiegels montiert, wobei die optische Achse des Videosensors 14 zur Erfassung des Verkehrsraumes derart ausgerichtet ist, dass der Überwachungsbereich 26 des Videosensors 14 annähernd die Beleuchtungsbereiche 32 der NIR-Scheinwerfer 18 vor dem Kraftfahrzeug 22 in Fahrtrichtung abdeckt. Der Überwachungsbereich 26 des Videosensors 14 hat einen Öffnungswinkel in Fahrtrichtung von etwa 30° und ist damit auf den Öffnungswinkel der NIR-Scheinwerfer 18 abgestimmt, der ebenfalls etwa 30° beträgt. Der Tiefenschärfebereich und damit der Überwachungsbereich 26 des Videosensors 14 beginnt bei etwa 2 Meter vor dem Videosensor 14. Ferner ist in Figur 2 ein Cluster von vier Ultraschallsensoren 10, die symmetrisch verteilt über dem vorderen Stoßfänger des Kraftfahrzeuges 22 angeordnet sind, eingetragen. Die Ultraschallsensoren 10 werden in der Funktion als Parkpilot-Sensoren zur Unterstützung des Fahrers beim Einparken verwendet. Alternativ wird in einer Variante ein Cluster von sechs Ultraschallsensoren 10 eingesetzt. Der Überwachungsbereich 28 der Ultraschallsensoren 10 deckt in etwa einen Bereich zwischen zwei bis fünf Meter, vorzugsweise 2 Meter, um den vorderen Stoßfänger des Kraftfahrzeuges 22 in Fahrtrichtung ab. Der Cluster deckt dabei den kompletten Raum vor den NIR-Scheinwerfern 18 ab. Aus den eingezeichneten Überwachungsbereichen 28, 30, 32 der Sensoren 10, 12, 14 wird deutlich, dass die Bereiche unmittelbar vor den NIR-Scheinwerfern 18 im bevorzugten Ausführungsbeispiel von mindestens zwei Sensortypen, namentlich dem Cluster der Ultraschallsensoren 10 und dem Videosensor 14 erfasst werden. Dies trägt zu einer hohen Detektionssicherheit von Objekten bei.

Figur 3 zeigt ein Ablaufdiagramm des Verfahrens zur Verbesserung der Sicht in einem Kraftfahrzeug des bevorzugten Ausführungsbeispiels, bestehend aus Funktionsmodulen 40, 42, 44, 46. Diese Figur 3 verdeutlicht die Signalverarbeitungsstruktur für die Überwachung der NIR-Scheinwerfer. Die Ultraschallsensoren, der Radarsensor und der Videosensoren liefern Sensorsignale in Form von Objektlisten 48, 50, 52, 54, 56, 58, wobei jeder Ultraschallsensor eine Objektliste 48, 50, 52, 54, der Radarsensor die Objektliste 56 und der Videosensor die Objektliste 58 liefert. Die Objektlisten 48, 50, 52, 54, 56, 58 enthalten Informationen zum Objekt und/oder zur Objektposition und/oder wenigstens eine Kenngröße des anwesenden und von dem Sensor erkannten Objektes. Diese Objektlisten 48, 50, 52, 54, 56, 58 werden an das Funktionsmodul 40 zur Objektfusion übertragen und dort derart fusioniert, dass in Abhängigkeit von gewichteten Objektmerkmalen des wenigstens einen anwesenden Objektes dessen Kennwerte ermittelt werden. Die im Funktionsmodul 40 gebildete Objektkarte 60 enthält die fusionierten Kennwerte der Objekte, wie beispielsweise die Position der Objekte und/oder wenigstens eine Kenngröße der Objekte, wie Höhe und/oder Breite und/oder Form der Objekte. Die Objekte dieser Objektkarte 60 werden dem Funktionsmodul 42 zur Objektklassifikation zugeführt. Dieses Funktionsmodul 42 liefert die Daten der Objektkarte 60 als Daten zur Objektklassifikation 62 an den Videosensor, der aufgrund seiner Bildinformation eine Klassifikation der Objekte anhand ihrer Größe und Form vornimmt. So können irrelevante Objekte, beispielsweise Kanaldeckel, die vom Radarsensor geliefert werden, von relevanten Objekten, wie Lebewesen, unterschieden werden. Alternativ oder zusätzlich zum Videosensoren werden in einer Variante andere Umfeldsensoren zur Objektklassifikation herangezogen. Vorraussetzung hierfür ist lediglich, dass diese Umfeldsensoren zusätzlich zum Objektabstand andere relevante Daten liefern, die für eine Klassifikation von Objekten nutzbar sind. Vom Funktionsmodul 42 wird die Karte 66 der klassifizierten Objekte an das Funktionsmodul 44 zur Beeinträchtigungsklassifikation übertragen. Im Funktionsmodul 44 und/oder im Funktionsmodul 46 wird eine Verfolgung (Tracking) von Objekten durchgeführt, so dass für jedes Objekt eine Beeinträchtigungskennzahl berechnet wird, die den bisherigen Abstand von dem und/oder den NIR-Scheinwerfern und/oder die bisherige Einwirkungszeit berücksichtigt. Dem Funktionsmodul liegt ein Regelwerk 68 von Beeinträchtigungssituationen zugrunde, das aus Augensicherheitsvorschriften abgeleitet ist. Das Regelwerk 68 wird aus gesetzlichen Vorschriften, insbesondere gesetzlichen Vorschriften zur Augensicherheit, und/oder freiwilligen Selbstverpflichtungen der Automobilhersteller abgeleitet. Diese Ableitung erfolgt alternativ oder zusätzlich in Abhängigkeit der Eigenschaften der Scheinwerfer, insbesondere der Apertur und/oder dem genutzten Spektralbereich und/oder der Leistung, und/oder des Kraftfahrzeugtyps. Die Ableitung des ersten und/oder des zweiten Grenzwertes erfolgt damit für jedes Fahrzeug und/oder jedes Land individuell. Typische Werte für den Mindestabstand, bei deren Unterschreiten eine Einstellung der Lichtquelle erfolgt, liegen je nach Ausführungsform der Lichtquelle, insbesondere des NIR-Scheinwerfers, und/oder der Expositionszeit, zwischen etwa 40cm bis zu etwa 15m. Alle klassifizierten Objekte werden im Funktionsmodul 44 hinsichtlich ihrer Beeinträchtigung anhand dieses Regelwerks 68 bewertet. Als Ergebnis wird eine Karte 66 der beeinträchtigten Objekte an das Funktionsmodul 46 zur Scheinwerfersteuerung übertragen. Das Funktionsmodul 46 zur Scheinwerfersteuerung detektiert zunächst aus dem Ort der beeinträchtigten Objekte, welcher NIR-Scheinwerfer betroffen ist. Im bevorzugten Ausführungsbeispiel wird dieser NIR-Scheinwerfer dann deaktiviert und/oder abgeschaltet. In einer Variante des bevorzugten Ausführungsbeispiels wird die Leistung und/oder wenigstens ein weiterer Parameter des NIR-Scheinwerfers, beispielsweise die spektrale Zusammensetzung des Lichtes des NIR-Scheinwerfers, derart gesteuert, dass basiert auf dem Regelwerk 68 der Beeinträchtigungssituationen eine Einstellung eines oder beider NIR-Scheinwerfer so erfolgt, dass keine Beeinträchtigung des Objekts eintritt. Hierzu wird die Lichtquelle derart eingestellt, dass die räumliche und/oder zeitliche Bestrahlung des wenigstens einen anwesenden Objektes zumindest mit Licht mit Wellenlängen außerhalb des sichtbaren Spektrums der Lichtquelle kleiner als ein vorgebbarer erster Grenzwert ist, wobei dieser erste Grenzwert aus dem Regelwerk 68 abgeleitet ist. Durch die Steuerung der Leistung wird die räumliche und/oder zeitliche Intensität des Lichtes des NIR-Scheinwerfers eingestellt. Im bevorzugten Ausführungsbeispiel werden zwei NIR-Scheinwerfer gesteuert, während in einer weiteren Variante nur ein oder mehr als zwei NIR-Scheinwerfer gesteuert werden.

Das beschriebene Verfahren und/oder die Vorrichtung und/oder die Verarbeitungseinheit zur Verbesserung der Sicht in einem Kraftfahrzeug wird deutlich, wenn NIR-Scheinwerfer und/oder Lichtquellen, die Licht mit Wellenlängen außerhalb des sichtbaren Spektrums emittieren, automatisch abgeschaltet werden, wenn Objekte in den Beeinträchtigungsbereich eindringen und/oder sich länger als die beschriebenen Grenzwerte in einem Bereich aufhalten. Dies ist direkt durch einen NIR-empfindlichen Sensor und/oder einen Sensor mit einer Empfindlichkeit bei Wellenlängen außerhalb des sichtbaren Spektrums und/oder durch Monitoren der Aktivierungssignale der Lichtquellen, beispielsweise den Ansteuersignalen und/oder den Versorgungssignalen und/oder den CAN-Botschaften, erkennbar. Die abstandsabhängige Deaktivierung und/oder Warnung und/oder Abschwächung ist durch Monitoren des Scheinwerferverhaltens direkt nachweisbar. Ferner ist das beschriebene Verfahren durch Beobachtung (Monitoren) der Kommunikation zwischen den Sensoren, der Verarbeitungseinheit und der Steuerung der Lichtquellen erkennbar.

Das beschriebene Verfahren und/oder die Vorrichtung und/oder die Verarbeitungseinheit sind nicht auf die Verwendung bei einem Nachtsichtsystem mit NIR-Scheinwerfern beschränkt. Vielmehr ist das Verfahren und/oder die Vorrichtung und/oder die Verarbeitungseinheit neben Nachtsichtfunktionen auch für andere automobile Funktionen, die mit Licht mit Wellenlängen außerhalb des sichtbaren Spektrums arbeiten verwendbar, beispielsweise bei der auf Infrarotlicht basierenden Kommunikation zwischen zwei Kraftfahrzeugen. Alternativ oder zusätzlich werden Lichtquellen überwacht, die Licht mit Wellenlängen im Ultravioletten (UV) Spektralbereich emittieren.

In einer weiteren Variante wird das beschriebene Verfahren und/oder die Vorrichtung und/oder die Verarbeitungseinheit im Heckbereich des Kraftfahrzeuges angewendet, beispielsweise bei einer infrarotbasierten Rückfahrkamera.

Bei einer weiteren Variante des beschriebenen Verfahrens und/oder der Vorrichtung und/oder der Verarbeitungseinheit wird die Überwachung für den Nahbereich der Lichtquellen derart verfeinert, dass lebende Objekte, wie Menschen, von Geräten, wie Scheinwerfereinstellgeräten, unterschieden werden. Die Lichtquellen werden in Abhängigkeit der Vitalität der anwesenden Objekte eingestellt. Die Ermittlung der Vitalität der anwesenden Objekte wird entweder über die Größe des Objektes und/oder die Form des Objektes und/oder den Rüclrstreufaktor und/oder über das zeitliche Verfolgen (Tracken) der Objekte ermittelt. Beispielsweise ist ein Scheinwerfereinstellgerät für beide Scheinwerfer durch mechanische Integration und Zusammenfassung größer als ein Mensch. Ferner weist ein Scheinwerfereinstellgerät eine andere Form als ein Mensch auf. Eine andere Variante sieht die Unterscheidung durch den Rückstreufaktor vor, indem beispielsweise für das Scheinwerfereinstellgerät ein Material gewählt wird, das einen deutlich von Menschen unterschiedlichen Rückstreufaktor aufweist und so eine Unterscheidung beispielsweise durch den Ultraschallsensor erlaubt. Alternativ oder zusätzlich wird in einer weiteren Variante über ein Verfolgen (Tracken) von Objekten und die Klassifizierung ihrer Geschwindigkeit ein stehendes Scheinwerfereinstellgerät von einem sich bewegenden Menschen unterschieden.

In einer weiteren Variante des bevorzugten Ausführungsbeispiels wird alternativ oder zusätzlich durch ein akustisches und/oder optisches Warnsignal das wenigstens eine anwesende Objekt gewarnt, falls die räumliche und/oder zeitliche Bestrahlung des wenigstens einen anwesenden Objektes zumindest mit dem Licht mit Wellenlängen außerhalb des sichtbaren Spektrums der Lichtquelle größer als ein vorgebbarer zweiter Grenzwert ist, wobei der zweite Grenzwert kleiner als der erste Grenzwert oder gleich dem ersten Grenzwert ist. In dieser Variante ist eine vorausgehende Warnung von Menschen möglich. So kann ein im Nahbereich detektiertes Objekt akustisch, beispielsweise durch eine Hupe, oder durch optische Signale, beispielsweise durch Lichthupe und/oder Warnblinklicht, mit sichtbarem Licht gewarnt werden. Ist das Objekt nach einer gewissen Latenzzeit, kleiner als die kritische Einwirkungszeit liegt, immer noch im Beeinträchtigungsbereich, dann wird die betroffene Lichtquelle, insbesondere der NIR-Scheinwerfer des Nachtsichtsystems, deaktiviert. Die Lichtquelle, insbesondere der NIR-Scheinwerfer, wird wieder aktiviert, wenn das Objekt den Beeinträchtigungsbereich verlässt und/oder der erste Grenzwert wieder unterschritten wird.

## Patentansprüche

1. Verfahren zur Verbesserung der Sicht in einem Kraftfahrzeug (22), wobei wenigstens eine Lichtquelle (18) des Kraftfahrzeuges (22) einen Beleuchtungsbereich beleuchtet,
- wenigstens ein Sensor (10, 12, 14) des Kraftfahrzeuges (22) wenigstens einen Teil des Beleuchtungsbereiches der Lichtquelle (18) auf die Anwesenheit von wenigstens einem Objekt überwacht, wobei der Sensors (10, 12, 14) in Abhängigkeit des wenigstens einen anwesenden Objektes Sensorsignale erzeugt,
**dadurch gekennzeichnet, dass**
- die Lichtquelle (18) in Abhängigkeit der Sensorsignale derart eingestellt wird, dass die räumliche und/oder zeitliche Bestrahlung des wenigstens einen anwesenden Objektes zumindest mit Licht mit Wellenlängen außerhalb des sichtbaren Spektrums der Lichtquelle kleiner als ein vorgebbarer erster Grenzwert ist.

2. Verfahren nach Anspruch 1, **dadurch gekennzeichnet, dass** die Lichtquelle (18) ein zumindest im nahen infraroten Wellenlängenbereich leuchtender Scheinwerfer ist.

3. Verfahren nach einem der vorhergehenden Ansprüche, **dadurch gekennzeichnet, dass** wenigstens ein Ultraschallsensor (10) und/oder wenigstens ein Radarsensor (12), der vorzugsweise im Wellenlängenbereich 24 GHz und/oder 77 GHz arbeitet, und/oder wenigstens ein LIDAR-Sensor und/oder wenigstens ein Videosensor (14) die Sensorsignale erzeugt.

4. Verfahren nach einem der vorhergehenden Ansprüche, **dadurch gekennzeichnet, dass** die Lichtquelle (18) in Abhängigkeit der Sensorsignale deaktiviert und/oder aktiviert wird

5. Verfahren nach einem der vorhergehenden Ansprüche, **dadurch gekennzeichnet, dass** die räumliche und/oder zeitliche Intensität des Lichtes der Lichtquelle (18) in Abhängigkeit der Sensorsignale eingestellt wird.

6. Verfahren nach einem der vorhergehenden Ansprüche, **dadurch gekennzeichnet, dass** die spektrale Zusammensetzung des Lichtes der Lichtquelle (18) in Abhängigkeit der Sensorsignale eingestellt wird.

7. Verfahren nach einem der vorhergehenden Ansprüche, **dadurch gekennzeichnet, dass** durch ein akustisches und/oder optisches Warnsignal das wenigstens eine anwesende Objekt gewarnt wird, falls die räumliche und/oder zeitliche Bestrahlung des wenigstens einen anwesenden Objektes zumindest mit dem Licht mit Wellenlängen außerhalb des sichtbaren Spektrums der Lichtquelle (18) größer als ein vorgebbarer zweiter Grenzwert ist, wobei der zweite Grenzwert kleiner als der erste Grenzwert oder gleich dem ersten Grenzwert ist.

8. Vorrichtung zur Verbesserung der Sicht in einem Kraftfahrzeug (12), insbesondere zur Durchführung des Verfahrens nach wenigstens einem der Ansprüche 1 bis 7, mit wenigstens einer Lichtquelle (18) des Kraftfahrzeuges (22), wobei die Lichtquelle (18) einen Beleuchtungsbereich beleuchtet,
- wenigstens einen Sensor (10,12,14) des Kraftfahrzeuges (22), wobei der Sensor (10,12,14) derart konfiguriert ist, dass der Sensor (10,12,14) wenigstens einen Teil des Beleuchtungsbereiches der Lichtquelle (18) auf die Anwesenheit wenigstens eines Objektes überwacht, wobei der Sensors (10,12,14) in Abhängigkeit des wenigstens einen anwesenden Objektes Sensorsignale erzeugt,
**gekennzeichnet durch**
- wenigstens eine Verarbeitungseinheit (16), die in Abhängigkeit der Sensorsignale die Lichtquelle (18) derart einstellt, dass die räumliche und/oder zeitliche Bestrahlung des wenigstens einen anwesenden Objektes zumindest mit dem Licht mit den Wellenlängen außerhalb des sichtbaren Spektrums der Lichtquelle (18) kleiner als ein vorgebbarer erster Grenzwert ist.

9. Verarbeitungseinheit zur Verbesserung der Sicht in einem Kraftfahrzeug (22), insbesondere zur Durchführung des Verfahrens nach wenigstens einem der Ansprüche 1 bis 7, wobei die Verarbeitungseinheit (16) wenigstens eine erste Schnittstelle zum Empfangen von Sensorsignalen wenigstens eines Sensors (10,12,14) eines Kraftfahrzeuges (22) aufweist,
- die Verarbeitungseinheit (16) Mittel zur Verarbeitung der Sensorsignale aufweist, wobei die Sensorsignale Informationen über die Anwesenheit von wenigstens einem Objekt innerhalb wenigstens eines Teils eines von dem Sensor (10,12,14) überwachten Beleuchtungsbereiches wenigstens einer Lichtquelle (18) enthalten,
**dadurch gekennzeichnet, dass**
- die Verarbeitungseinheit (16) Mittel zur Erzeugung von Einstellsignalen der Lichtquelle (18) aufweist, wobei die Einstellsignale in Abhängigkeit der Sensorsignale derart erzeugt werden, dass die räumliche und/oder zeitliche Bestrahlung des wenigstens einen anwesenden Objektes zumindest mit dem Licht mit den Wellenlängen außerhalb des sichtbaren Spektrums der Lichtquelle (18) kleiner als ein vorgebbarer erster Grenzwert ist,
- die Verarbeitungseinheit (16) wenigstens eine zweite Schnittstelle zur Übertragung der erzeugten Einstellsignale an die Lichtquelle (18) aufweist.

10. Verwendung der Vorrichtung nach Anspruch 8 und/oder der Verarbeitungseinheit (16) nach Anspruch 9 in einem Nachtsichtsystem in einem Kraftfahrzeug (22).

## Claims

1. Method for improving the visibility in a motor vehicle (22), wherein at least one light source (18) in the motor vehicle (22) illuminates an illumination area,
**characterized in that**
- at least one sensor (10, 12, 14) in the motor vehicle (22) monitors at least part of the illumination area of the light source (18) for the presence of at least one object, wherein the sensor (10, 12, 14) generates sensor signals as a function of the at least one object which is present,
**characterized in that**
- the light source (18) is adjusted, as a function of the sensor signals, such that the spatial and/or temporal irradiation of the at least one object which is present at least with light at wavelengths outside the visible spectrum of the light source is less than a predeterminable first limit value.

2. Method according to Claim 1, **characterized in that** the light source (18) is a headlight providing light at least in the near infrared wavelength range.

3. Method according to one of the preceding claims, **characterized in that** at least one ultrasound sensor (10) and/or at least one radar sensor (12), preferably operating in the 24 GHz and/or 77 GHz frequency sense, and/or at least one LIDAR sensor and/or at least one video sensor (14) generates the sensor signals.

4. Method according to one of the preceding claims, **characterized in that** the light source (18) is deactivated and/or activated as a function of the sensor signals.

5. Method according to one of the preceding claims, **characterized in that** the spatial and/or temporal intensity of the light of the light source (18) is adjusted as a function of the sensor signals.

6. Method according to one of the preceding claims, **characterized in that** the spectral composition of the light from the light source (18) is adjusted as a function of the sensor signals.

7. Method according to one of the preceding claims, **characterized in that** an audible and/or visual warning signal alerts the at least one object which is present if the spatial and/or temporal irradiation of the at least one object which is present with the light at wavelengths outside the visible spectrum of the light source (18) is greater than a predeterminable second limit value, with the second limit value being less than the first limit value or being equal to the first limit value.

8. Device for improving the visibility in a motor vehicle (22), in particular for carrying out the method according to at least one of Claims 1 to 7, with at least one light source (18) in the motor vehicle (22), wherein the light source (18) illuminates an illumination area,
**characterized by**
- at least one sensor (10, 12, 14) in the motor vehicle (22), wherein the sensor (10, 12, 14) is configured such that it monitors at least part of the illumination area of the light source (18) for the presence of at least one object, wherein the sensor (10, 12, 14) generates sensor signals as a function of the at least one object which is present,
**characterized by**
- at least one processing unit (16), which adjusts the light source (18) as a function of the sensor signals such that the spatial and/or temporal irradiation of the at least one object which is present, at least with the light at the wavelengths outside the visible spectrum of the light source (18), is less than a predeterminable first limit value.

9. Processing unit for improving the visibility in a motor vehicle (22), in particular for carrying out the method according to at least one of Claims 1 to 7, wherein the processing unit (16) has at least one first interface for receiving sensor signals from at least one sensor (10, 12, 14) on a motor vehicle (22),
**characterized in that**
- the processing unit (16) has means for processing the sensor signals, wherein the sensor signals contain information on the presence of at least one object within at least part of an illumination area, monitored by the sensor (10, 12, 14), of at least one light source (18),
**characterized in that**
- the processing unit (16) has means for generating adjustment signals for the light source (18), wherein the adjustment signals are generated as a function of the sensor signals such that the spatial and/or temporal irradiation of the at least one object which is present at least with the light at the wavelengths outside the visible spectrum of the light source (18) is less than a predeterminable first limit value, and
- the processing, unit (16) has at least one second interface for transmitting the generated adjustment signals to the light source (18).

10. Use of the device according to Claim 8 and/or of the processing unit (16) according to Claim 9 in a night vision system in a motor vehicle (22).

## Revendications

1. Procédé pour améliorer la visibilité dans un véhicule automobile (22) selon lequel
- au moins une source lumineuse (18) du véhicule automobile (22) éclaire une zone d'éclairage, et
- au moins un capteur (10, 12, 14) du véhicule automobile (22) surveille au moins une partie de la zone d'éclairage de la source lumineuse (18) pour déterminer la présence d'au moins un objet, les capteurs (10, 12, 14) générant des signaux en fonction de la présence d'au moins un objet,
**caractérisé en ce que**
la source lumineuse (18) est réglée en fonction des signaux de capteur pour que l'éclairage dans l'espace et/ou dans le temps d'au moins un objet présent, au moins avec de la lumière de longueurs d'ondes au-delà du spectre visible de la source lumineuse, soit inférieur à une première valeur limite prédéfinie.

2. Procédé selon la revendication 1,
**caractérisé en ce que**
la source lumineuse (18) est un projecteur éclairant au moins dans une plage de longueurs d'ondes du proche infrarouge.

3. Procédé selon l'une des revendications précédentes,
**caractérisé en ce qu'**
au moins un capteur à ultrasons (10) et/ou au moins un capteur radar (12) travaillant de préférence dans une plage de longueurs d'ondes de 24 GHz et/ou 77 GHz et/ou au moins un capteur LIDAR et/ou au moins un capteur vidéo (14) génèrent des signaux.

4. Procédé selon l'une des revendications précédentes,
**caractérisé en ce que**
la source lumineuse (18) est neutralisée et/ou activée en fonction des signaux de capteur.

5. Procédé selon l'une des revendications précédentes,
**caractérisé en ce que**
l'intensité dans l'espace et/ou dans le temps de la lumière émise par la source lumineuse (18) est réglée en fonction des signaux de capteur.

6. Procédé selon l'une des revendications précédentes,
**caractérisé en ce que**
la composition spectrale de la lumière de la source lumineuse (18) est réglée en fonction des signaux de capteur.

7. Procédé selon l'une quelconque des revendications précédentes,
**caractérisé en ce qu'**
un signal avertisseur acoustique et/ou optique d'au moins un objet présent avertit qu'en cas d'éclairage dans l'espace et/ou dans le temps au moins de l'objet présent, avec au moins de la lumière de longueurs d'ondes au-delà du spectre visible de la source lumineuse (18) est supérieur à une seconde valeur limite prédéfinie,
cette seconde valeur limite prédéfinie étant inférieure ou égale à la première valeur limite.

8. Dispositif pour améliorer la visibilité dans un véhicule automobile (22), notamment pour la mise en oeuvre du procédé selon au moins l'une des revendications 1 à 7, comportant au moins une source lumineuse (18) du véhicule (22), la source lumineuse (18) éclairant une plage d'éclairage,
- au moins un capteur (10, 12, 14) du véhicule (22), le capteur (10, 12, 14) étant configuré pour surveiller au moins une partie de la plage d'éclairage de la source lumineuse (18) pour déterminer la présence d'au moins un objet, le capteur (10, 12, 14) générant des signaux en fonction de la présence d'au moins un objet,
**caractérisé par**
au moins une unité de traitement (16) qui, en fonction des signaux de capteur, règle la source lumineuse (18) pour que l'éclairage dans l'espace et/ou dans le temps d'au moins un objet présent, avec de la lumière de longueurs d'ondes située au-delà du spectre visible de la source lumineuse (18), soit inférieur à une première valeur limite prédéfinie.

9. Unité de traitement pour améliorer la visibilité d'un véhicule automobile (22), notamment pour la mise en oeuvre du procédé selon au moins l'une des revendications 1 à 7, selon lequel l'unité de traitement (16) comporte au moins une première interface pour recevoir les signaux de capteur émis par au moins un capteur (10, 12, 14) d'un véhicule automobile (22),
- l'unité de traitement (10) comportant des moyens pour traiter les signaux de capteur, ces signaux de capteur contenant des informations relatives à la présence d'au moins un objet dans au moins une partie d'une plage d'éclairage surveillée par l'un des capteurs (10, 12, 14) d'au moins une source lumineuse (18),
**caractérisée en ce que**
- l'unité de traitement (16) comporte des moyens pour générer des signaux de réglage de la source lumineuse (18), les signaux de réglage étant générés en fonction des signaux de capteur de façon que l'éclairage dans l'espace et/ou dans le temps d'au moins un objet présent, au moins avec la lumière de longueurs d'ondes située au-delà du spectre visible de la source lumineuse (18), soit inférieur à une première valeur limite prédéfinie, et
- l'unité de traitement (16) comporte au moins une seconde interface pour transmettre les signaux de réglage générés à la source lumineuse (18).

10. Application du dispositif selon la revendication 8 et/ou de l'unité de traitement (16) selon la revendication 9, dans un système de vision nocturne d'un véhicule automobile (22).
